# EUROPEAN PATENT APPLICATION

(11) **EP 1 672 320 A1**
(43) Date of publication of application: **21.06.2006**
(21) Application number: 05027203.8
(22) Date of filing: 13.12.2005
(51) Int. Cl.: G01C 21/36, B60R 16/02, G10L 15/22

(54) **Navigation apparatus and input/output apparatus with voice recognition**

(30) Priority: 15.12.2004 JP 2004362876
(71) Applicant: AISIN AW CO., LTD., Anjo-shi, Aichi 444-1192 (JP)
(72) Inventor: Nakayama, Takaaki, Okazaki-shi Aichi 444-8564 (JP); Miura, Naoki, Okazaki-shi Aichi 444-8564 (JP)
(74) Representative: Kramer - Barske - Schmidtchen

(57) **Abstract**

An input/output apparatus (20) recognizes an input voice and determines, based on the input voice, a request. The request is determined by the input/output apparatus (20) performing voice recognition. A navigation apparatus (10) transmits data of a navigation command list to the input/output apparatus (20), the navigation command list including a list of commands acceptable by the navigation apparatus (10) and determines, based on the navigation command list, whether the request corresponds to an acceptable command for the navigation apparatus. If the request corresponds to an acceptable command, the acceptable command is transmitted from the input/output apparatus to the navigation apparatus. The navigation apparatus (20) transmits, as a response to the command, the guidance information to the input output/apparatus, which outputs the received guidance information.

## Description

The disclosure of Japanese Patent Application No. 2004-362876 filed on December 15, 2004, including the specification, drawings and abstract thereof, is incorporated herein by reference in its entirety.

Related technical fields include systems, methods, and programs that provide guidance information.

Conventional in-vehicle navigation apparatus display a current position of a vehicle on a display in a superimposed manner, search for an optimum route to a destination, provide route guidance information by displaying the optimum route on a map. Conventional navigation apparatus accept a voice command issued by a user (as disclosed, for example, in Japanese Unexamined Patent Application Publication No. 2002-350158). Such a navigation apparatus has a voice recognition unit and a voice recognition dictionary in which voice recognition data is described. The voice recognition unit recognizes an input voice by comparing an analog to digital converted (A/D-converted) input voice with the recognition data. The result of the voice recognition is obtained in the form of character data. Based on the voice recognition performed by the voice recognition unit, the navigation apparatus performs a process specified by the input voice command, such as searching for a destination or changing the scaling factor of a map. The result of the process is displayed on a display.

However, the above described conventional voice recognition may causes a large processing load to be imposed on the navigation apparatus. The large processing load may, for example, cause a delay in providing guidance, and thus it becomes difficult to quickly provide route guidance information. Furthermore, it can be difficult to change the voice recognition dictionary or the voice recognition even though the voice recognition function may not be a main function of the navigation apparatus.

In view of at least the above, it is beneficial to reduce the processing load imposed on the navigation apparatus by a voice recognition function and/or to easily change or modify a voice recognition function.

Various exemplary implementations of the principled described herein provide guidance information providing systems, methods, and programs that may recognize an input voice with an input/output apparatus and may determine, based on the input voice, a request. The request may be determined by the input/output apparatus performing voice recognition. The guidance information providing systems, methods, and programs may transmit data of a navigation command list to an input/output apparatus. The navigation command list may include a list of commands acceptable by a navigation apparatus. The systems, methods, and programs may determine, based on the navigation command list, whether the request corresponds to an acceptable command for the navigation apparatus. If the request corresponds to an acceptable command, the guidance information providing systems, methods, and programs may transmit the acceptable command from the input/output apparatus, to the navigation apparatus, may transmit, as a response to the command, the guidance information from the navigation apparatus to the input output/apparatus, and may output the received guidance information on the input/output apparatus.

Various exemplary implementations of the principled described herein provide guidance information providing systems, methods, and programs that may produce, with the input/output apparatus, an input/output command list, the input/output command list including commands acceptable by the input/output apparatus. The guidance information providing systems, methods, and programs may determine, based on the navigation command list and the input/output command list, whether the request is for a command to be performed by the navigation apparatus or for a command to be performed by the input/output apparatus. If it is determined that the request is for a command to be performed by the input/output apparatus, the systems, methods, and programs may determine, based on the input/output command list, whether the request corresponds to an acceptable command for the input/output apparatus. If it is determined that the request corresponds to an acceptable command based on the input/output command list, the systems, methods, and programs may produce, using the input/output apparatus, the guidance information and may output the guidance information on the input/output apparatus.

Exemplary implementations will now be described with reference to the accompanying drawings, wherein:

Fig. 1 is a block diagram showing an exemplary route search system;

Fig. 2 shows an exemplary method of producing a list of command candidates;

Fig. 3 shows an exemplary guidance method; and

Fig. 4 shows an exemplary screen displayed in response to an input voice command.

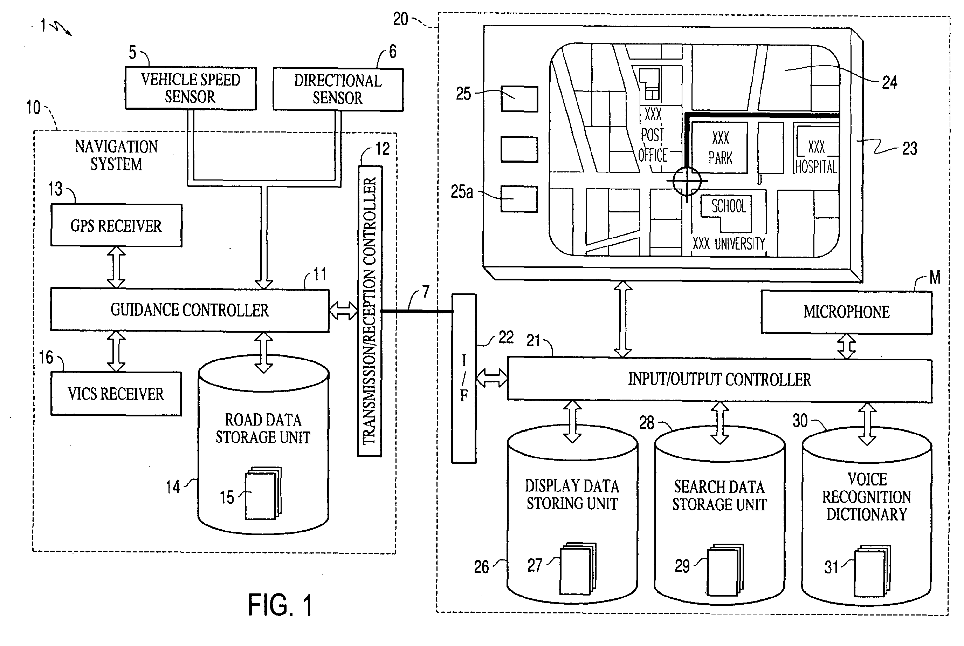

Fig. 1 is a block diagram illustrating an exemplary route guidance system that provides guidance information. As shown in Fig. 1, the route guidance system 1 may functionally, physically, and/or conceptually include, for example, an in-vehicle navigation apparatus 10 and an input/output apparatus 20. The navigation apparatus 10 may include, for example, a guidance controller 11. The guidance controller 11 may include, for example, hardware such as a CPU and/or a RAM (e.g., for searching for a route) and/or software modules (e.g., a route searching program and/or a list transmission program).

The navigation apparatus 10 may also include, for example, a transmission/reception controller 12. The transmission/reception controller 12 may, for example, control transmission and reception of data to and/or from the input/output apparatus 20 via a cable 7. The transmission/reception controller 12 and the cable 7 may include, for example, a known interface and a known cable such as, for example, an interface and a cable according to the IEEE1394 (the Institute of Electrical and Electronic Engineers 1394) standards.

The navigation apparatus 10 may include, for example, a GPS (Global Positioning System) receiver 13 serving as vehicle position detector. The GPS receiver 13 may calculate the latitude, longitude, and/or altitude of a vehicle position based on radio waves received from GPS satellites. When radio waves transmitted from GPS satellites cannot be effectively received, the guidance controller 11 may receive various kinds of data from, for example, a vehicle speed sensor 5 and/or a direction sensor 6 disposed in the vehicle and, based on the received data, determine the vehicle position by calculating the relative distance and the relative direction with respect to a reference position. The guidance controller 11 may also have a capability of correcting the vehicle position calculated by the GPS receiver 13.

The guidance controller 11 may, for example, receive data including traffic information from a VICS (Vehicle Information and Communication System) receiver 16 disposed in the navigation apparatus 10. The VICS receiver 16 may be a device adapted to receive data from a beacon disposed on a road. The data received from the beacon may include, for example, position information, road information (e.g., a road name), traffic information (e.g., congestion information), and/or predicted driving times to main points.

The navigation apparatus 10 may also include, for example, a road data storage unit (memory) 14. For example, a hard disk may be used as the road data storage unit 14, and road data 15, from which guidance information may be produced, may be stored in the road data storage unit 14. Each road data 15 may be, for example, data associated with roads in each unit area of a country, and each road data 15 may include, for example, node data, link data, latitude/longitude data, road width data, road type data, and intersection data.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein the term "node" refers to a point connecting two links. A node may be, for example, an intersection, an intersection having more than three roads, a curve, and/or a point at which the road type changes.

The input/output apparatus 20 connected to the navigation apparatus 10, for example, via a cable 7 may include, for example, an input/output controller 21. The input/output controller 21 may include, for example, hardware such as, for example, a CPU and/or RAM and/or software such as, for example, a voice recognition program, a candidate extraction program, and/or a command interpretation program. The input/output controller 21 may be connected to the navigation apparatus 10 via the cable 7 and an interface (I/F) 22 (according to, for example, the IEEE1394 standards) such that various kinds of data may be transmitted and/or received to and/or from the navigation apparatus 10. The input/output controller 21 may convert a voice signal input via a microphone M from analog to digital form and may calculate the feature value of an input voice from the A/D-converted signal in accordance with, for example, the voice recognition program.

The input/output apparatus 20 also may include, for example, a display 23. The display 23 may include, for example, a touch panel 24 for displaying images and switches 25. The input/output controller 21 may perform, for example, various processes in accordance with a command and/or data input via the touch panel 24 or some of the switches 25. The switches 25 may include a voice recognition switch 25a for performing voice recognition. To cause the route guidance system 1 to perform voice recognition, a voice command may be input after the voice recognition switch 25a is pressed.

The input/output apparatus 20 also may include, for example, a display data storage unit (memory) 26 realized by, for example, a hard disk. In the display data storage unit 26, for example, display data 27 for displaying various images are stored. More specifically, the display data 27 may include, for example, screen display data for displaying an operation screen such as a menu screen, map display data for displaying various kinds of maps such as a bird's-eye view, a plan view map, a small area map, and a wide area map, and facility display data for providing facility information. The display data 27 for displaying various kinds of maps may be stored in connection with nodes or links corresponding to respective roads on maps or in connection with area identifiers indicating places other than roads, such as "town areas" or "private areas." Based on the vehicle position or the guidance route informed by the navigation apparatus 10, the input/output apparatus 20 may read necessary display data 27 from the display data storage unit 26 and may produce map display data. The resultant map display data may be output to the touch panel 24.

The input/output apparatus 20 may also include, for example, a search data storage unit (memory) 28. The search data storage unit 28 may be realized, for example, by a hard disk. Various kinds of search data 29 for use in searching of a destination and/or facilities may be stored in the search data storage unit 28. The search data 29 may be produced for each registered point, and each search data 29 may include, for example, a name such as, for example, "xxx City Office," "xxx Interchange," coordinate data, an address, a telephone number, and/or a facility type such as "restaurant." For example, if a category such as "restaurant" or a telephone number is input, the input/output controller 21 may detects, based on the search data 29, a restaurant located close to the current vehicle position or a destination corresponding to the telephone number.

The input/output apparatus 20 may also include, for example, a voice recognition dictionary (memory) 30. In the voice recognition dictionary 30, storage data 31 may be stored indicating feature values voice signals corresponding to respective words. As described above, the guidance controller 11 may compare an input voice with feature values of the respective recognition data 31 described in the voice recognition dictionary 30 to detect recognition data 31, in the form of character data, most similar to the input voice. The process of recognizing an input voice can be performed in accordance with any known method.

The guidance information provided by the route guidance system 1 constructed in the above-described manner may include, for example, route guidance information in terms of a route to a destination, predicted driving time information, toll information, congestion avoidance route information, and/or other information provided by common functions of the navigation apparatus 10. The guidance information also may include, for example, search result information provided by the search function of the input/output apparatus 20 and/or display data 27 of an area close to the vehicle position.

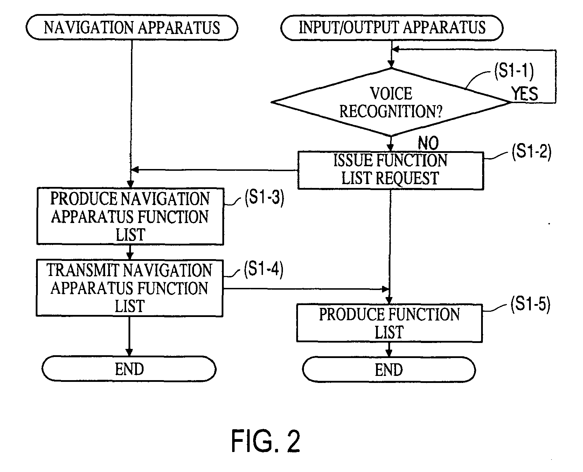

Now, referring to Fig. 2, an exemplary method of producing a function list is described. The exemplary method may be implemented, for example, by one or more components of the above-described systems. However, even though the exemplary structure of the above-described systems may be referenced in the description of the method, it should be appreciated that the referenced structure is exemplary and the exemplary process need not be limited by any of the above-described exemplary structure.

As shown in Fig. 2, first, the input/output apparatus 20 may wait for a voice recognition switch 25a to be pressed to perform voice recognition (step S1-1). If the voice recognition switch 25a is pressed (step S1-1 is YES), the input/output controller 21 of the input/output apparatus 20 may request the navigation apparatus 10 to transmit a function list (e.g., data of the navigation command list) (step S1-2).

If the guidance controller 11 of the navigation apparatus 10 receives the request from the input/output apparatus 20 via the cable 7 and the transmission/reception controller 12, the guidance controller 11 may produce the navigation command list (step S1-3). Specifically, the guidance controller 11 may determine, based on the vehicle position and driving conditions, whether performing of processes such as "change route," "displaying alternative route," "calculate toll," "calculate predicted driving time," and/or "search for a route to avoid traffic congestion" is allowed. For example, the guidance controller 11 determines whether changing of the route from the current guidance route to another route is possible by checking the relative distance from the current vehicle position to the destination and checking whether there is another route selectable for the vehicle. The input/output controller 11 may produce a navigation function list indicating commands (such as a "change route" command) acceptable by the navigation apparatus 10 by describing identifiers indicating the executable functions or commands in the list.

After the navigation command list is produced, including allowed commands, the guidance controller 11 may transmit the produced navigation command list to the input/output apparatus 20 via the cable 7 (step S1-4). If the input/output controller 21 of the input/output apparatus 20 receives the navigation command list, the input/output controller 21 produces a function list by adding the list of functions available on the input/output apparatus 20 (the input/output command list) to the received navigation command list (step S1-5). In this process, based on the vehicle position informed by the navigation apparatus 10 and the format of an image displayed on the touch panel 24, the input/output controller 21 determines whether the input/output apparatus 20 is capable of performing processes such as "display details," "display wide area," "search for nearby facility," etc.

For example, the input/output controller 21 may detect the scaling factor of a map image displayed on the touch panel 24 and determine whether there is display data 27 usable to display a map image with a smaller scaling factor. If such display data 27 is stored in the display data storage unit 26, the input/output controller 21 determines that "displaying of details" is possible. On the other hand, when there is no such display data 27 usable to display a map image with a smaller scaling factor (i.e., when a map image with a smallest allowable scaling factor is currently displayed on the touch panel 24), the input/output controller 21 determines that "displaying of details" is impossible. Thus, the input/output controller 21 produces a list of functions (such as "displaying of details") executable by the input/output apparatus 20 by describing identifiers indicating the executable functions or commands in the list. Furthermore, the input/output controller 21 combines this list with the navigation function list into a single unified list.

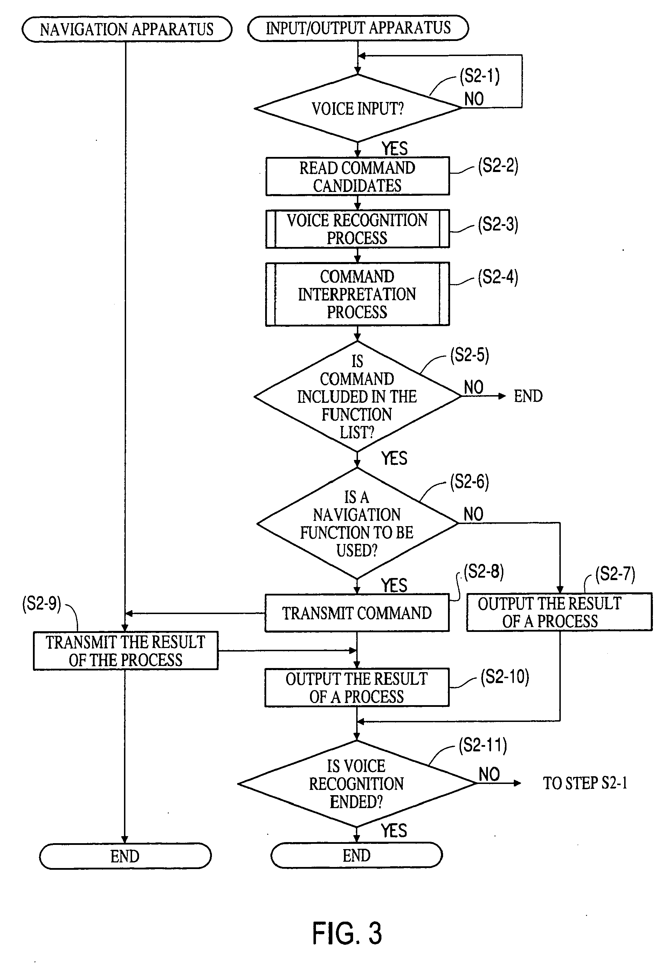

An exemplary method for producing guidance information in response to an input voice command is described below with reference to Fig. 3. The exemplary method may be implemented, for example, by one or more components of the above-described systems. However, even though the exemplary structure of the above-described systems may be referenced in the description of the method, it should be appreciated that the referenced structure is exemplary and the exemplary process need not be limited by any of the above-described exemplary structure.
As shown in Fig. 3, if the voice recognition switch 25a is pressed, the input/output apparatus 20 may wait for a voice command to be input by a user (step S2-1). If a voice signal is received, for example, via the microphone M (step S2-1 is YES), the input/output apparatus may read command candidates (step S2-2). The command candidates are character data indicating voice commands for executing respective functions of the navigation apparatus 10 and the input/output apparatus 20, and the command candidates are stored together with identifies of the respective functions in advance in a storage unit (not shown) of the input/output apparatus 20. For example, for a "route change" function of the navigation apparatus 10, command candidates such as "route change," "path change," and/or "change the route," are stored in a table. For a "restaurant search" function of the input/output apparatus 20, command candidates such as "restaurant" and "hungry" are stored together with an identifier of the restaurant search function in the table.

After the input/output controller 21 reads the table, the input/output controller 21 may perform a voice recognition process (step S2-3). Specifically, the input/output controller 21 may calculate the feature value for AID-converted input voice in accordance with the voice recognition program. The input/output controller 21 may then compare the feature value of the input voice with feature values of the respective recognition data 31 described in the voice recognition dictionary 30 to detect recognition data 31, in the form of character data, most similar to the input voice.

The input/output controller 21 may interpret the request based on the voice recognition result in accordance with a request command interpretation program (step S2-3). For example, in the case in which "I'm hungry" is obtained as a result of the voice recognition in step S2-2, the input/output controller 21 may determine whether a command exactly equal to, similar to, and/or corresponding in meaning to the recognized phrase is included in the command candidates read in step S2-2.

For example, the input/output controller 21 may determine, from the command candidate table, that the input voice "I'm hungry" corresponds in meaning to the "restaurant search" command and thus the input/output controller 21 may determine that the restaurant search has been requested by the user.

After the request issued by the user is determined, the input/output controller 21 may detect the function, corresponding to the command candidate, of the navigation apparatus 10 or the input/output apparatus 20 and the input/output controller 21 determines whether this function is included in the function list produced in the function list production process (step S2-5).

For example, if the restaurant search is requested by the user, the input/output controller 21 may determine whether the "restaurant search" is included in the function list. If the function specified by the input voice is not included in the function list (step S2-5 is NO), the process is ended. In this case, a message may be displayed on the touch panel 24 to inform a user that it is impossible to execute the command specified by the input voice or a message may be displayed to prompt the user to reissue a voice command.

On the other hand, when the command specified by the input voice is included in the function list (step S2-5 is YES), the input/output controller 21 may determine whether the command specified by the input voice uses a function of the navigation apparatus 10 (step S2-6). If it is determined, for example, that the restaurant search is requested by the user, then it may be determined that no function of the navigation apparatus 10 is used (step S2-4 is NO). In this case, the process requested by the input voice command is performed and the result of the process (guidance information) is output (step S2-7).

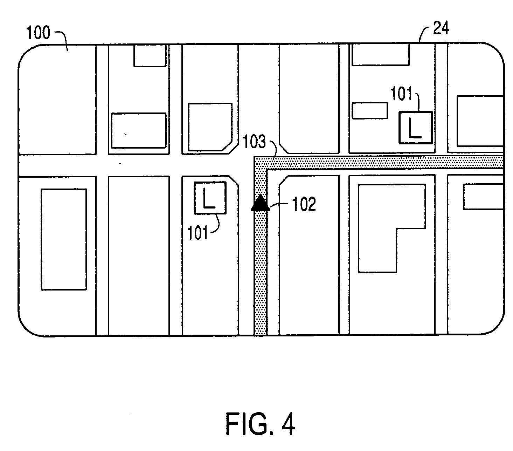

In the case in which the "restaurant search" is requested by the input voice command, the input/output controller 21 of the input/output apparatus 20 may search for restaurants located in an area close to the current vehicle position based on the search data 29, and the result may displayed on the touch panel 24. Thus, as shown in Fig. 4, a vehicle position mark 102 and marks 101 indicating restaurants located close to the vehicle position may be displayed on a map image 100 displayed on the touch panel 24. If a route from a start point to a destination has been determined via a route search process, a route mark 103 may also be displayed.

On the other hand, if it is determined in the request command interpretation process that a "route change" is requested by the input voice command, the input/output controller 21 may determine that a function of the navigation apparatus 10 is needed (that is, step S2-6 is YES), and the input/output controller 21 may transmit a command corresponding to the request issued by the user to the navigation apparatus 10 via the cable 7 (step S2-8). The command transmitted to the navigation apparatus 10 may be an identifier indicating the function of the navigation apparatus 10.

If the navigation apparatus 10 receives the command, the navigation apparatus 10 may perform a process specified by the command and may transmit a result to the input/output apparatus 20 (step S2-9). For example, in a case in which "route change" is requested by the user, the guidance controller 11 may search for a route other than the currently selected route, based on, for example, the current vehicle position and the road data 15, and may transmits identification data, such as, for example, node data, link data, etc., indicating a route detected as a result of the searching process to the input/output apparatus 20 via the transmission/reception controller 12 and the cable 7.

If a "predicted driving time calculation" is requested by the user, the guidance controller 11 may calculate the predicted driving time needed to drive the vehicle from the current vehicle position to the destination, for example, based on the road data 15 and/or traffic information received via the VICS receiver 16. The data indicating the resultant predicted driving time may be transmitted to the input/output apparatus 20 via the cable 7. As described above, because the voice recognition and the interpretation of the input voice command are performed by the input/output apparatus 20, the navigation apparatus 10 has to perform only a process specified by the command received from the input/output apparatus 20. As result, the processing load imposed on the navigation apparatus 10 in response to the input voice command is reduced.

If the input/output apparatus 20 receives the result of the process from the navigation apparatus 10, the input/output apparatus 20 may output the received result (step S2-10). For example, in a case in which a new guidance route is received from the navigation apparatus 10, the input/output apparatus 20 may read display data 27 corresponding to the specified route from the display data storage unit 26 and may display the guidance route together with a map image on the touch panel 24. In this process, the input/output controller 21 may update the route mark 103 shown in Fig. 4 so as to indicate the new guidance route. If the data indicating the predicted driving time is received from the navigation apparatus 10, the input/output controller 21 may read screen data 27 in which to display the predicted driving time and displays it on the touch panel 24.

After the result of the process requested by the user is output (step S2-7 or S2-10), the input/output controller 21 may waits for the voice recognition switch 25a to be pressed again to end the voice recognition operation (step S2-11). If the voice recognition is ended (step S2-11 is YES), the guidance process based on the input voice command may be ended. However, if the voice recognition operation is not ended (step S2-11 is NO), the process returns to step S2-1 and the above-described process is repeated.

The above-described exemplary systems and methods provide at least one or more of the following advantages.

According to the above examples, the navigation apparatus 10 may include, for example, the GPS receiver 13 and the road data storage unit 14, and the input/output apparatus 20 may include, for example, the input/output controller 21 (adapted to perform voice recognition and interpretation of an input voice command) and the voice recognition dictionary 30. The navigation apparatus 10 and the input/output apparatus 20 may connected to each other such that data can be transmitted between them. When a voice command is input, the navigation apparatus 10 may transmits the function list indicating commands acceptable by the navigation apparatus 10 to the input/output apparatus 20.

The input/output apparatus 20 may recognizes an input voice command based on the voice recognition dictionary 30, and may selects a command corresponding to the request issued by a user via voice from the command candidates. Based on the function list, the input/output apparatus 20 may transmit the command, which corresponds to the request issued by the user and which is acceptable by the navigation apparatus 10, to the navigation apparatus 10. If the result of a process performed by the navigation apparatus 10 is received from the navigation apparatus, the input/output apparatus 20 may display the received result on the touch panel 24. As described above, the input/output apparatus 20 performs voice recognition and interpretation of an input voice command, while the navigation apparatus 10 transmits the function list and performs a process in response to a request issued by a user. Thus, in the guidance process performed in accordance with an input voice command, the navigation apparatus 10 only has to perform the transmission of the function list and the process requested by the user. As a result, it is possible to achieve a reduction in the processing load imposed on the navigation apparatus 10.

When the voice recognition dictionary 30 or the voice recognition function needs to be changed or updated, they can be changed by simply connecting an updated input/output apparatus 20 (having a new voice recognition dictionary 30 and/or a new input/output controller 21) to the navigation apparatus 10. This makes it very easy to change the voice recognition function, in particular, for example, without having to replace or disassemble the navigation apparatus 10.

In the above examples, the input/output apparatus 20 may combine the function list indicating the commands acceptable by the input/output apparatus 20 with the navigation function list into a unified single function list. Based on the unified function list, the input/output apparatus 20 may determine whether a voice command issued by a user corresponds to a function of the navigation apparatus 10 or the input/output apparatus 20. If it is determined that a voice command issued by a user corresponds to a function of the input/output apparatus 20, the input/output apparatus 20 may performs a process corresponding to the command and outputs the result of the process. This makes it possible for the input/output apparatus 20 to perform a function such as changing of a scaling factor of a map, facility searching, etc. using the display data storage unit 26 or the search data storage unit 28 in accordance with an input voice command. As a result the processing load of the navigation apparatus may be further reduced.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

For example, the navigation apparatus 10 need not include the VICS receiver 16. The navigation 10 may include at least one of the display data storage unit 26, the search data storage unit 28, and/or the voice recognition dictionary 30.

When the navigation apparatus 10 may include, for example, the display data storage unit 26, the navigation apparatus 10 may read display data 27 depending on the vehicle position and the guidance route and transmit the read display data 27 to the input/output apparatus 20. In this case, the navigation apparatus 10 may determine whether the "display details" function is available.

When the navigation apparatus 10 may include, for example, the search data storage unit 28, the navigation apparatus 10 may perform the searching process in accordance with an input voice command. In this case, the navigation apparatus 10 may determine whether a search function such as a "restaurant search" function is available.

When the navigation apparatus 10 may include, for example, the voice recognition dictionary 30, the input/output apparatus 20 may access the navigation apparatus 10 to acquire the recognition data 31 and may perform voice recognition.

In the above examples, each time the voice recognition switch 25a is pressed, the input/output apparatus 20 may transmit the function list request to the navigation apparatus 10. Alternatively, the function list may be transmitted only once to provide the function list.

In the above examples, the guidance information output in accordance with an input voice command may be displayed on the touch panel 24. Alternatively, a voice output unit (not shown) may be provided in the input/output apparatus 20 and the guidance information may be output in the form of voice information from the voice output unit.

The road data storage unit 14 in the navigation apparatus 10 may be realized, for example, by an optical disk mounted on a disk drive (not shown) provided in the navigation apparatus 10. The display data storage unit 26 and the search data storage unit 28 in the input/output apparatus 20 may be realized by, for example, an optical disk mounted on a disk drive (not shown) provided in the input/output apparatus 20.

In step S2-2, the input/output apparatus 20 may read only command candidates corresponding to functions included in the function list. In this case, functions executable by the navigation apparatus 10 and functions executable by the input/output apparatus 20 may be detected based on the produced function list, and only command candidates related to the respective functions may be read. Because the input/output controller 21 does not read command candidates that cannot be executed by the navigation apparatus 10 or the input/output apparatus 20, it is impossible to interpret an input voice command corresponding to a function that cannot be executed. In such a case, in response to an input voice command, a message may be displayed to inform that the input voice command cannot be executed. In this technique, because only command candidates included in the function list are extracted, it becomes unnecessary to perform the process (in step S2-5) to determine whether a function corresponding to an input voice command issued by a user is included in the function list.

The vehicle speed sensor 5 or the direction sensor 6 may be disposed in an integral manner in the navigation apparatus 10. Also, the connection between the navigation apparatus 10 and the input/output apparatus 20 may be achieved by a high-speed serial bus other than the IEEE1394 bus or by an optical communication line. That is, any communication interface may be used to connect the navigation apparatus 10 and the input/output apparatus 20, as long as it can connect the navigation apparatus 10 and the input/output apparatus 20 disposed separately.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus (10), comprising
a controller (11) that is adapted
to communicate with an input/output apparatus (20), the input/output apparatus capable of receiving a voice input and determining a request based on the voice input using voice recognition,
to transmit a navigation command list to the input/output apparatus, the navigation command list including a list of commands acceptable by the navigation apparatus, and
to receive, if the input/output apparatus determines that the request corresponds to a command on the navigation command list, the command.

2. An input/output apparatus (20), comprising
a controller (21) that is adapted
to receive an input voice,
to determine a request by performing voice recognition on the input voice,
to receive data of a navigation command list from a navigation apparatus (10), the navigation command list including a list of commands acceptable by the navigation apparatus,
to determine, based on the navigation command list whether the request corresponds to a command that is acceptable for the navigation apparatus, and
if the request corresponds to a command that is acceptable for the navigation apparatus, to transmit the acceptable command to the navigation apparatus,
to receive guidance information from the navigation apparatus in response to the acceptable command, and
to output the received guidance information.

3. The input/output apparatus of claim 2, wherein
the controller is adapted to determine that the request corresponds to an acceptable command for the navigation apparatus if the request is at least one of equal to, similar to, and corresponding in meaning to a command on the navigation command list.

4. The input/output apparatus of claim 2 or 3, wherein
the controller is adapted to notify, if the request is not acceptable according to the navigation command list, that the request is unacceptable or that another request should be made.

5. The input/output apparatus of one of claims 2 to 4, wherein
the controller is adapted
to produce an input/output command list, the input/output command list including commands acceptable by the input/output apparatus,
to determine, based on the navigation command list and the input/output command list, whether the request is for a command to be performed by the navigation apparatus or for a command to be performed by the input/output apparatus, and
if it is determined that the request is for a command to be performed by the input/output apparatus,
to determine, based on the input/output command list whether the request corresponds to a command that is acceptable for the input/output apparatus, and
if the request corresponds to a command that is acceptable for the input/output apparatus
to produce the guidance information, and
to output the produced guidance information.

6. The input/output apparatus of claim 5, wherein
the controller is adapted to determine that the request corresponds to an acceptable command for the input/output apparatus if the request is at least one of equal to, similar to, and corresponding in meaning to a command on the input/output command list.

7. The input/output apparatus of claim 5 or 6, wherein the controller is adapted to notify, if the request is not acceptable according to the input/output command list, that the request is unacceptable or that another request should be made.

8. A guidance information providing system, comprising
an input/output apparatus according to one of claims 2 to 7, and
a navigation apparatus, comprising
a controller that is adapted
to transmit the navigation command list to the input/output apparatus;
to receive the acceptable command,
to produce guidance information based on the acceptable command, and
to transmit the produced guidance information to the input/output apparatus.
